# EUROPÄISCHE PATENTSCHRIFT

(11) **EP 3 433 125 B1**
(45) Veröffentlichungstag und Bekanntmachung des Hinweises auf die Patenterteilung: **20.10.2021**
(21) Anmeldenummer: 17713877.3
(22) Anmeldetag: 16.03.2017
(51) Int. Cl.: B60L 53/14, B60L 53/35

(54) **KONTAKTIERUNGSSYSTEM ZUM HERSTELLEN EINER ELEKTRISCHEN VERBINDUNG ZWISCHEN EINEM FAHRZEUG UND EINER ENERGIEVERSORGUNG**
CONTACT SYSTEM FOR ESTABLISHING AN ELECTRIC CONNECTION BETWEEN A VEHICLE AND A POWER SUPPLY
SYSTÈME DE MISE EN CONTACT POUR ÉTABLIR UNE CONNEXION ÉLECTRIQUE ENTRE UN VÉHICULE ET UNE ALIMENTATION EN ÉNERGIE

(30) Priorität: 25.03.2016 AT 502502016
(43) Veröffentlichungstag der Anmeldung: 30.01.2019
(73) Patentinhaber: Easelink GmbH, 8010 Graz (AT)
(72) Erfinder: LEIBETSEDER, Manuel, 8042 Graz (AT); STOCKINGER, Hermann, 8010 Graz (AT)
(74) Vertreter: Prinz & Partner mbB
(86) Internationale Anmeldenummer: PCT/AT2017/060070
(87) Internationale Veröffentlichungsnummer: WO 2017/161395

(56) Entgegenhaltungen:
- WO-A2-2010/060720
- WO-A2-2010/076976
- DE-A1-102014 216 568
- US-A1- 2009 011 616

## Beschreibung

Die Erfindung betrifft ein Kontaktierungssystem zum Herstellen einer elektrischen Verbindung zwischen einem Fahrzeug und einer Energieversorgung gemäß dem Oberbegriff des Anspruchs 1.

Ein solches Kontaktierungssystem ist beispielsweise aus dem Dokument US 8,307,967 B2 bekannt, das ein Fahrzeug mit einem sekundären Übertragungselement und ein in der Fahrbahn eines Parkplatzes eingelassenes primäres Übertragungselement offenbart. Wenn das durch einen Elektromotor angetriebene Fahrzeug auf dem Parkplatz abgestellt wird, dann senkt eine Mechanik das sekundäre Übertragungselement auf das primäre Übertragungselement ab, wodurch elektrischer Strom zum Aufladen der Energieversorgung des Fahrzeugs über Kontaktflächen der Übertragungselemente fließen kann.

Das in der Fahrbahn des Parkplatzes eingelassene primäre Übertragungselement ist durch zwei Reihen von rechteckförmigen oder rasterförmig angeordneten runden elektrisch gegeneinander isolierten primären Kontaktflächen gebildet. Dem primären Übertragungselement sind Steuerungsmittel zugeordnet, die mit jeder der primären Kontaktflächen einerseits und mit einem Pluspol und einen Minuspol einer Niederspannungsenergiequelle im Bereich vom 12 bis 24 Volt andererseits verbunden sind. Mittels der Steuerungsmittel kann jede der primären Kontaktflächen, die vorerst potentialfrei geschaltet sind, mit dem Pluspol oder mit dem Minuspol verbunden werden.

Das in der US 8,307,967 B2 offenbarte sekundäre Übertragungselement am Fahrzeug weist eine Reihe quadratischer sekundärer Kontaktflächen auf, wobei die Größen der Kontaktflächen so gewählt wurden, dass es zu keinen Kurzschlüssen der Kontaktflächen eines Übertragungselements durch Kontaktflächen des anderen Übertragungselements kommen kann. Nach dem mechanischen Absenken des sekundären Übertragungselements auf das primäre Übertragungselement ermitteln die Steuerungsmittel welche primären und sekundären Kontaktflächen im elektrischen Kontakt stehen und verbinden dann die passenden primären Kontaktflächen des primären Übertragungselements mit dem Pluspol und die passenden sekundären Kontaktflächen des sekundären Übertragungselements mit dem Minuspol der Niederspannungsquelle, damit die Energieversorgung des Fahrzeugs geladen wird. Die WO 2010/076976 A2 offenbart ein ähnliches Kontaktierungssystem.

In der DE 10 2014 216 568 A1 ist ein System zur Herstellung einer elektrischen Verbindung zwischen einer Stromquelle und einem elektrischen Stromkreis in einem Kraftfahrzeug beschrieben, wobei die elektrische Verbindung über Räder des Kraftfahrzeugs hergestellt wird.

Die WO 2010/060720 A2 betrifft ein Verfahren zum automatischen Laden von vollständig oder teilweise elektrisch betriebenen Fahrzeugen, wobei das Fahrzeugs mittels einer autonomen Fahrzeugbewegung oberhalb eines Ladekontaktes positioniert wird.

Bei dem bekannten Kontaktierungssystem hat sich als Nachteil erwiesen, dass mit der Niederspannungsquelle die Ladevorgänge relativ lange dauern, weshalb die Energieversorgung des Fahrzeugs bei einer Parkdauer von beispielsweise nur einer Stunde nicht vollständig geladen wird. Aus Sicherheitsgründen ist die Verwendung von über dem Niederspannungsbereich liegenden Spannungen zwischen Pluspol und Minuspol nicht durchführbar, da es sonst zu Elektrisierungen kommen kann, wenn beispielsweise eine Person während des Ladevorgangs unter das Fahrzeug und auf die Kontaktflächen greift.

Der Erfindung liegt die Aufgabe zugrunde ein Kontaktierungssystem zu schaffen, bei dem die Ladedauer zum vollständigen Aufladen der Energieversorgung im Fahrzeug reduziert werden kann, wobei gleichzeitig die notwendige Sicherheit gewährleistet sein muss.

Erfindungsgemäß wird die vorliegende Aufgabe durch ein Kontaktierungssystem gelöst, das die kennzeichnenden Merkmale des Anspruches 1 aufweist.

Hierdurch ist sichergestellt, dass primäre Kontaktflächen, die von den Steuerungsmitteln aus dem potentialfreien Zustand geschaltet und mit dem Pluspol oder dem Minuspol verbunden werden weil sie im elektrischen Kontakt mit sekundären Kontaktflächen stehen, durch die zweite Isolationsfläche zuverlässig abgedeckt werden. Hierdurch ist der Vorteil erhalten, dass keine Gefahr besteht, dass eine Person, beispielsweise mit einem Finger, eine mit dem Pluspol oder dem Minuspol verbundene Kontaktfläche berühren kann. Da dies sichergestellt ist, können auch Spannungsquellen mit Spannungen von 60 Volt und mehr zwischen den Pluspol und den Minuspol der primären Kontaktflächen angelegt werden, wodurch die Energieversorgung des Fahrzeugs mit höheren Strömen während einer kürzeren Ladezeit geladen werden kann.

Die äußere Kontur der primären Kontaktflächen kann richtungsunabhängig sein, wie dies beispielsweise bei kreisförmigen primären Kontaktflächen der Fall ist. Die äußere Kontur der primären Kontaktflächen kann aber auch richtungsabhängig sein, wie dies beispielsweise bei einer sechseckigen oder ovalen Kontur der primären Kontaktflächen der Fall ist.

Die Breite der zweiten Isolationsfläche, zur Abschirmung spannungsführender Pole gegen Berührung durch Personen, wird nun so breit gewählt, dass diese sowohl für eine richtungsunabhängige als auch für eine richtungsabhängige Kontur der primären Kontaktfläche immer ausreichend breit ist. Dies wird erfindungsgemäß dadurch erzielt, wenn die Breite der zweiten Isolationsfläche breiter als der Umfangskreis um die größte äußere Kontur der primären Kontaktflächen gewählt wird. Hierdurch ist der Vorteil erhalten, dass das sekundäre Übertragungselement richtungsunabhängige zum Kontaktieren auf das erste Übertragungselement abgesenkt werden kann.

Gemäß einem anderen Ausführungsbeispiel der Erfindung kann die Breite der zweiten Isolationsfläche aber auch richtungsabhängig so breit gewählt werden, dass diese gerade etwas breiter als die Breite der berührten primären Kontaktfläche in derselben Richtung ist. In diesem Fall müssen allerdings Positionierungsmittel vorgesehen sein die sicherstellen, dass das sekundäre Übertragungselement zum Kontaktieren ausgerichtet auf das primäre Übertragungselement abgesenkt wird. Hierdurch ist der Vorteil erhalten, dass das sekundäre Übertragungselement besonders klein ausgeführt werden kann, was dessen Integration in das Fahrzeug erleichtert.

Weitere vorteilhafte Ausgestaltungen des erfindungsgemäßen Kontaktierungssystems zum Herstellen einer elektrischen Verbindung zwischen einem Fahrzeug und einer Energieversorgung zum Laden des Fahrzeugs werden im Folgenden anhand der Figuren näher erläutert.

Figur 1 zeigt ein erstes Ausführungsbeispiel des erfindungsgemäßen Kontaktierungssystems, bei dem eine zweite sekundäre Kontaktfläche eine erste sekundäre Kontaktfläche des sekundären Übertragungselements vollständig umgibt.

Figur 2A zeigt eine primäre Kontaktfläche des primären Übertragungselements gemäß Figur 1 in einer vergrößerten Darstellung.

Figur 2B zeigt die sekundären Kontaktflächen des sekundären Übertragungselements gemäß Figur 1

Figur 3 zeigt die rasterförmig angeordneten primären Kontaktflächen des primären Übertragungselements gemäß Figur 1.

Figur 4 zeigt ein zweites Ausführungsbeispiel des erfindungsgemäßen Kontaktierungssystems, bei dem eine erste sekundäre Kontaktfläche und eine zweite sekundäre Kontaktfläche als Kreissegment ausgeführt und von einer Isolationsfläche umgeben sind.

Figur 5 zeigt das primäre Übertragungselement und das sekundäre Übertragungselement eines dritten Ausführungsbeispieles des erfindungsgemäßen Kontaktierungssystems, bei dem die äußere Kontur der primären Kontaktflächen und die Breite der zweiten Isolationsfläche des sekundären Übertragungselements richtungsabhängig unterschiedlich breit sind.

Figur 6 zeigt eine primäre Kontaktfläche des primären Übertragungselements gemäß Figur 5 in einer vergrößerten Darstellung.

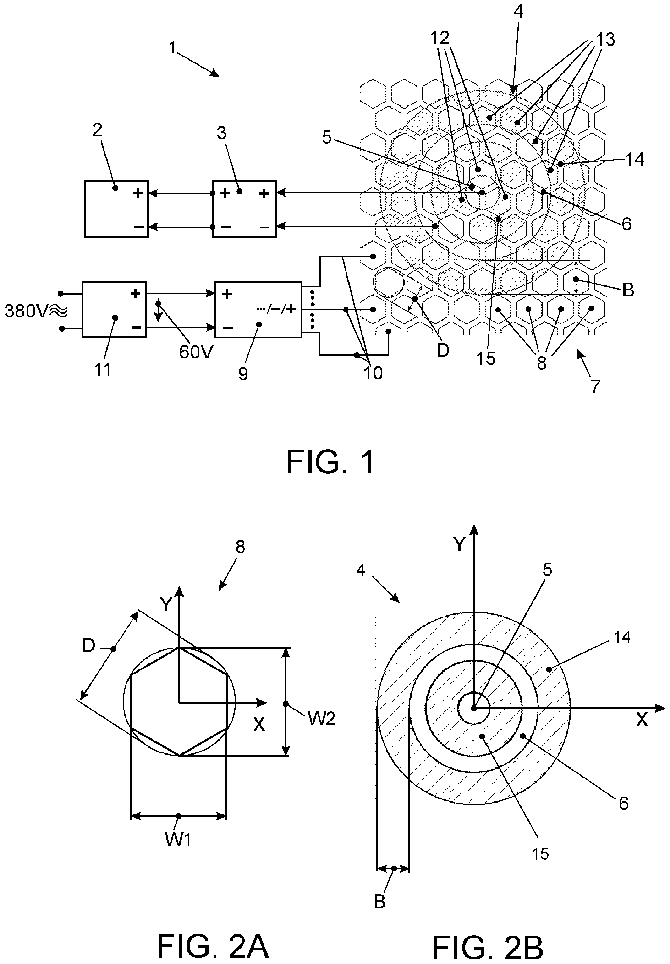

Die Figuren 1 bis 3 zeigen ein erstes Ausführungsbeispiel eines Kontaktierungssystems 1 zum Herstellen einer elektrischen Verbindung zwischen einem Fahrzeug und einer Energieversorgung mit einem Pluspol und einem Minuspol zum Laden des Fahrzeugs. Von dem Fahrzeug ist nur eine Batterie 2, eine Ladeschaltung 3 und ein sekundäres Übertragungselement 4 dargestellt, an dem dem Fahrzeug Energie zum Laden der Batterie 2 zugeführt wird. In Figur 2B ist eine erste sekundäre Kontaktfläche 5, die über die Ladeschaltung 3 mit dem Pluspol der Batterie 2 verbunden ist, und eine zweite sekundäre Kontaktfläche 6, die über die Ladeschaltung 3 mit dem Minuspol der Batterie 2 verbunden ist, des sekundären Übertragungselements 4 dargestellt.

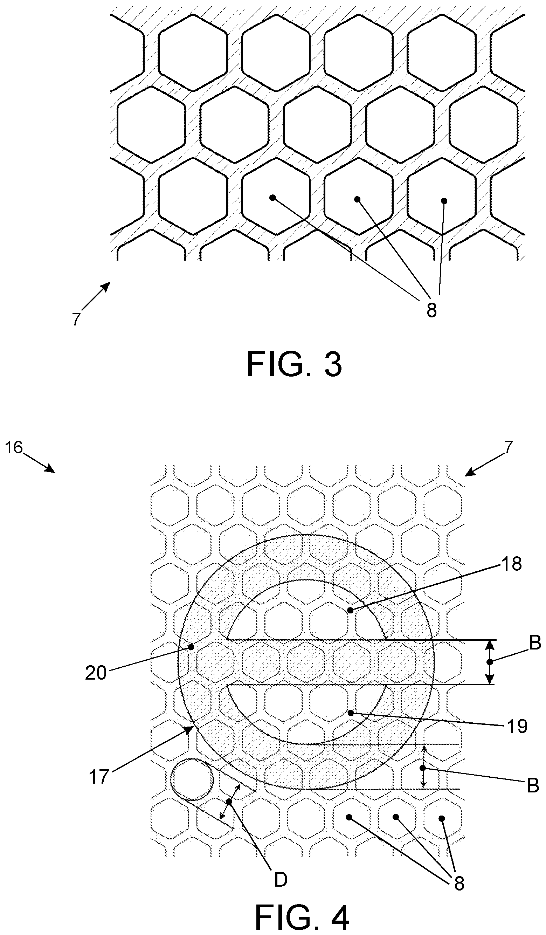

Das Kontaktierungssystem 1 weist weiters ein in Figur 3 dargestelltes in der Straßenoberfläche eines Parkplatzes eingelassenes oder aufgesetztes primäres Übertragungselement 7 auf, das eine Mehrzahl an strukturiert und insbesondere rasterförmig angeordneten gegeneinander elektrisch isolierten primären Kontaktflächen 8 mit einheitlicher äußerer sechseckiger Kontur aufweist. Ein Umfangskreis mit einem Durchmesser D legt die äußere Kontur der primären Kontaktflächen 8 fest.

Das Kontaktierungssystem 1 weist weiters Steuerungsmittel 9 auf, die mit jeder der primären Kontaktflächen 8 verbunden sind. Aus Gründen der besseren Übersichtlichkeit sind nur einige wenige dieser Verbindungsleitungen 10 in Figur 1 dargestellt. Die Steuerungsmittel 9 sind weiters mit einer Spannungsquelle 11 verbunden, die am örtlichen Stromnetz mit beispielsweise 380 Volt hängt und eine Gleichspannung von 60 Volt, 120 Volt, 200 Volt oder mehr zwischen dem Pluspol und dem Minuspol zur Verfügung stellt. Die Steuerungsmittel 9 sind zum Ermitteln erster primärer Kontaktflächen 12 ausgebildet, die die erste sekundäre Kontaktfläche 5 berühren, und sind zum Ermitteln zweiter primärer Kontaktflächen 13 ausgebildet, die die zweite sekundäre Kontaktfläche 6 berühren. Nach dem Ermitteln der erster primärer Kontaktflächen 12 und der zweiter primärer Kontaktflächen 13 sind die Steuerungsmittel 9 zum Herstellen einer elektrischen Verbindung zwischen dem Pluspol der Spannungsquelle 11 und den ersten primären Kontaktflächen 12 und zum Herstellen einer elektrischen Verbindung zwischen dem Minuspol der Spannungsquelle 11 und den zweiten primären Kontaktflächen 13 ausgebildet. Hierdurch wird somit eine elektrische Verbindung zwischen den Pluspolen und den Minuspolen der Spannungsquelle 11 und der Ladeschaltung 3 im Fahrzeug hergestellt, worauf die Ladeschaltung die ihr zugeführte Spannung von 60 Volt und mehr auf die im Fahrzeug benötigte Spannung von beispielsweise 400 Volt transformiert.

Das sekundäre Übertragungselement 4 des Kontaktierungssystems 1 weist nunmehr eine die sekundäre Kontaktfläche 6 umgebende zweite Isolationsfläche 14 mit einer Breite B auf, die zumindest eine Mindestbreite aufweist, die dem Durchmesser D des Umfangskreises um die äußere Kontur einer der primären Kontaktflächen 8 entspricht. Hierdurch ist sichergestellt, dass keine der mit dem Minuspol verbundenen zweiten primären Kontaktflächen 13 mit einem Finger einer Person kontaktiert werden kann. Die zweite Isolationsfläche 14 kann zur weiteren Erhöhung der Sicherheit, damit zweite primäre Kontaktflächen 13 auch mit beispielweise einem zwischen das primäre Übertragungselement 7 und das sekundäre Übertragungselement 4 geschobenen metallischen Stab nicht mehr kontaktiert werden können, eine die Mindestbreite übersteigende Breite B aufweisen. Die Sicherheit ist aber auf jeden Fall gewährleistet solange die zweite Isolationsfläche 14 zumindest die Mindestbreite aufweist. Hierdurch ist der Vorteil erhalten, dass trotz der großen Gleichspannung von 60 Volt und mehr mit entsprechend großen Ladeströmen und somit kurzen Ladezyklen der Batterie 2 des Fahrzeugs die notwendige Sicherheit gewährleistet ist.

In Figur 2A ist eine der primären Kontaktflächen 8 vergrößert dargestellt. Die äußere Kontur der primären Kontaktfläche 8 weist in einer Richtung X eine Ausdehnung auf, die eine richtungsabhängige Mindestbreite W1 der zweiten Isolationsfläche angibt. Die äußere Kontur der primären Kontaktfläche 8 weist in einer Richtung Y eine Ausdehnung auf, die die richtungsabhängige Mindestbreite W2 der zweiten Isolationsfläche angibt, die dem Durchmesser D entspricht. Gemäß dem ersten Ausführungsbeispiel weist die zweite Isolationsfläche 14 eine Breite B auf, wobei gilt dass B > W1 und auch B > W2 ist. Hierdurch ist der Vorteil erhalten, dass das sekundäre Übertragungselement 4 in beliebiger Ausrichtung auf das primäre Übertragungselement 7 zum Kontaktieren abgesenkt werden kann.

Bei dem Kontaktierungssystems 1 gemäß dem ersten Ausführungsbeispiel der Erfindung umgibt die zweite sekundäre Kontaktfläche 6 die erste sekundäre Kontaktfläche 5 vollständig, weshalb auch die erste sekundäre Kontaktfläche 5 durch die zweite Isolationsfläche 14 vollständig umgeben ist. Hierdurch ist vorteilhafterweise auch durch die zweite Isolationsfläche 14 sichergestellt, dass auch die erste sekundäre Kontaktfläche 5 mit einem Finger eines Benutzers nicht kontaktiert werden kann.

Eine besonders vorteilhafte Ausführungsform ist dadurch gegeben, wenn die erste sekundäre Kontaktfläche 5 im Zentrum der zweiten sekundären Kontaktfläche 6 angeordnet ist und, wenn die zweite sekundäre Kontaktfläche 6 und die zweite Isolationsfläche 14 konzentrische Kreise um die erste sekundäre Kontaktfläche 5 bilden. Hierdurch ist die erste sekundäre Kontaktfläche 5 besonders gut abgeschirmt.

Besonders vorteilhaft ist weiters eine erste Isolationsfläche 15 als konzentrischer Kreis um die erste sekundäre Kontaktfläche 5 zwischen der ersten sekundären Kontaktfläche 5 und der zweiten sekundären Kontaktfläche 6 anzuordnen, wobei die erste Isolationsfläche 15 mit der Breite B ebenfalls zumindest die Mindestbreite W2 aufweist. Hierdurch ist die für Spannungen von 60 Volt und mehr nötige elektrische Isolation der ersten sekundären Kontaktfläche 5 von der zweiten sekundären Kontaktfläche 6 gewährleistet und weiters ist erreicht, dass die erste sekundäre Kontaktfläche 5 besonders gut von ungewollten Berührungen durch Personen geschützt ist.

Als vorteilhaft hat sich weiters erwiesen die primären Kontaktflächen 8 als Sechsecke auszubilden. Dies ermöglicht, verglichen mit aus dem Stand der Technik bekannten kreisförmigen primären Kontaktflächen, besonders große primäre Kontaktflächen 8 mit viel Fläche auszubilden, um starker Ladeströme zu übertragen ohne, dass die Kontaktflächen 8 zerstört werden. Andere Formen von primären Kontaktflächen, wie beispielsweise rechteckförmig, achteckig, oval oder dreieckig wären ebenfalls möglich.

Die Steuerungsmittel 9 sind vorteilhafterweise dazu ausgebildet alle primären Kontaktflächen 8, die weder als erste primäre Kontaktfläche 12 noch als zweite primäre Kontaktfläche 13 ermittelt wurden, potentialfrei zu schalten. Hierdurch ist sichergestellt das allen nicht zur Übertragung von Energie zum Laden des Fahrzeugs nötigen primären Kontaktflächen 12 und 13 des primären Übertragungselements 7 von einer Person berührt werden können ohne, dass es zu Elektrisierungen oder Kurzschlüssen des Kontaktierungssystems 1 kommen kann.

Figur 4 zeigt ein zweites Ausführungsbeispiel eines erfindungsgemäßen Kontaktierungssystems 16, wobei nur die Kontaktflächen eines sekundären Übertragungselements 17 unterschiedlich ausgebildet sind. Das sekundäre Übertragungselement 17 weist eine erste sekundäre Kontaktfläche 18 und eine zweite sekundäre Kontaktfläche 19 auf, die beide als Kreissegment ausgeführt sind. Beide sekundäre Kontaktflächen 18 und 19 sind von einer Isolationsfläche 20 umgeben, die eine erste und eine zweite Isolationsfläche bildet. Vorteilhafterweise weist auch die Isolationsfläche 20 zwischen den sekundären Kontaktflächen 18 und 19, entsprechend einer ersten Isolationsfläche, und um die sekundären Kontaktflächen 18 und 19, entsprechend einer zweiten Isolationsfläche, eine Breite B auf, die größer als die Mindestbreite W2 und der Durchmesser D des Umfangskreises um die äußere Kontur der primären Kontaktfläche 8 ist. Somit ist auch bei dem Kontaktierungssystem 16 gemäß dem zweiten Ausführungsbeispiel die notwendige Sicherheit gegeben, um bei richtungsunabhängiger Kontaktierung des primären Übertragungselements 7 mit dem sekundären Übertragungselement 17 und mit hohen Gleichspannungen kurze Ladezyklen zu erreichen.

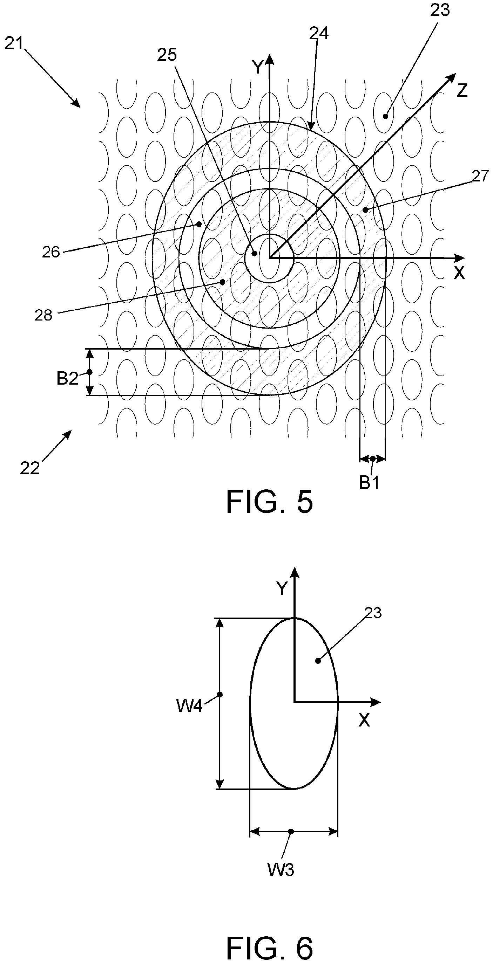

Figur 5 zeigt ein primäres Übertragungselement 21 gemäß einem dritten Ausführungsbeispiel eines erfindungsgemäßen Kontaktierungssystems 22, bei dem die äußere Kontur von primären Kontaktflächen 23 oval und somit richtungsabhängig ausgebildet ist. Ein sekundäres Übertragungselement 24 weist eine erste sekundäre Kontaktfläche 25 und eine zweite sekundäre Kontaktfläche 26 auf, die durch eine zweite Isolationsfläche 27 nach außen und durch eine erste Isolationsfläche 28 gegeneinander elektrisch isoliert sind. Erfindungsgemäß muss die zweite Isolationsfläche 27 nur richtungsabhängig die Mindestbreite aufweisen, die größer als die Ausdehnung der Kontur der berührten primären Kontaktfläche 23 in derselben Richtung ist.

Figur 6 zeigt die primäre Kontaktfläche 23 des Kontaktierungssystems 22 in einer vergrößerten Darstellung. In Richtung X weist die Kontur der primären Kontaktfläche 23 eine Ausdehnung auf, die einer Mindestbreite W3 in Richtung X entspricht. In Richtung Y weist die Kontur der primären Kontaktfläche 23 eine Ausdehnung auf, die einer Mindestbreite W4 in Richtung Y entspricht. Um das sekundäre Übertragungselement 24 besonders schmal auszubilden weist die zweite Isolationsfläche 27 bei einander berührender primären und sekundären Kontaktflächen eine Breite B1 auf. Da die Ausdehnung der primären Kontaktfläche 23 in Richtung Y größer ist gilt: B2 > W4 und B1 > W3. In einer um beispielsweise 45 Grad zur Richtung X und zur Richtung Y geneigten Richtung Z weist die zweite Isolationsfläche 27 eine Breite auf, die größer als die Ausdehnung der primären Kontaktfläche 23 in derselben Richtung Z ist. Hierdurch ist der Vorteil erhalten, dass das sekundäre Übertragungselement 24 besonders schmal ausgebildet werden kann, um dieses gut in ein Fahrzeug integrieren zu können.

Das Kontaktierungssystem 22 gemäß dem dritten Ausführungsbeispiel der Erfindung weist nunmehr Positionierungsmittel auf um sicherzustellen, dass das sekundäre Übertragungselement 24 richtungsabhängig, das heißt im Wesentlichen gemäß den in den Figuren 5 und 6 dargestellten Richtungen X und Y auf das primäre Übertragungselement 21 positioniert wird. Positionierungsmittel können durch einen Sensor, eine Kamera mit Bilderkennung oder durch mechanische Mittel gebildet sein, wobei dem Fachmann weitere Möglichkeiten bekannt sind. Eine grobe Ausrichtung ist bereits durch die Parkplatzeinteilung gegeben, weshalb Positionierungsmittel auch durch seitliche Erhöhungen der Fahrbahn links und rechts des Parkplatzes gegeben sein können, die sicherstellen, dass das Fahrzeug nur in dieser Richtung geparkt werden kann.

Es kann erwähnt werden, dass auch Gleichspannungen von 80, 100 oder 400 Volt, sowie Wechselspannungen in ähnlichen Spannungsbereichen an die Kontaktflächen der Übertragungselemente mit der zweiten Isolationsfläche angelegt werden können. Es ist außerdem möglich Kontaktflächen für mehr als zwei Pole mit der zweiten Isolationsfläche auszubilden, sodass beispielsweise Dreiphasenwechselstrom übertragen werden kann. Über weitere sekundäre Kontaktflächen könnten weitere Wechselspannungen mit unterschiedlicher Spannungsamplitude oder Frequenz übertragen werden. Ebenso wäre die Übertragung von Daten bezüglich beispielsweise des Ladezustandes des Fahrzeugs über weitere sekundäre Kontaktflächen möglich. Auch könnte das primäre Übertragungsmittel am Fahrzeug und das sekundäre Übertragungsmittel in der Fahrbahn eines Parkplatzes vorgesehen sein. Die Isolationsfläche kann durch ein dem Fachmann bekanntes Material wie Kunststoff oder Keramik gebildet sein.

## Patentansprüche

1. Kontaktierungssystem (1; 16; 22) zum Herstellen einer elektrischen Verbindung zwischen einem Fahrzeug und einer Energieversorgung (11) mit einem ersten Pol und einem zweiten Pol zum Laden des Fahrzeugs, mit:
einem primären Übertragungselement (7; 21), das eine Mehrzahl an strukturiert angeordneten gegeneinander elektrisch isolierten je eine äußere Kontur aufweisenden primären Kontaktflächen (8; 23) aufweist, und mit
einem sekundären Übertragungselement (4; 17, 24), das zumindest eine erste sekundäre Kontaktfläche (5; 18; 25), zum Kontaktieren des ersten Pols, und zumindest eine zweite sekundäre Kontaktfläche (6; 19; 26), zum Kontaktieren des zweiten Pols, aufweist, wobei die sekundären Kontaktflächen (5, 6; 18, 19; 24, 25) gegeneinander elektrisch isoliert sind, und mit
Steuerungsmitteln (9), die zum Ermitteln erster primärer Kontaktflächen (12) ausgebildet sind, die die erste sekundäre Kontaktfläche (5) berühren, und die zum Ermitteln zweiter primärer Kontaktflächen (13) ausgebildet sind, die die zweite sekundäre Kontaktfläche (6) berühren, und die zum Herstellen einer elektrischen Verbindung über die ersten primären Kontaktflächen (12) und die erste sekundäre Kontaktfläche (5; 18) zwischen dem ersten Pol der Energieversorgung (11) und dem ersten Pol des Fahrzeugs ausgebildet sind und die zum Herstellen einer elektrischen Verbindung über die zweiten primären Kontaktflächen (13) und die zweite sekundäre Kontaktfläche (6; 19) zwischen dem zweiten Pol der Energieversorgung (11) und dem zweiten Pol des Fahrzeugs zur Energieversorgung des Fahrzeugs ausgebildet sind, wobei die Steuerungsmittel (9) weiter dazu ausgebildet sind, alle primären Kontaktflächen (8; 23), die weder als erste primäre Kontaktfläche (12) noch als zweite primäre Kontaktfläche (13) von den Steuerungsmitteln (9) ermittelt wurden, potentialfrei zu schalten.
**dadurch gekennzeichnet, dass**
eine die sekundären Kontaktflächen (5, 6; 18; 19; 24, 25) umgebende zweite Isolationsfläche (14; 20; 27) vorgesehen ist, die zumindest eine gegebenenfalls richtungsabhängige Mindestbreite (B, B1, B2) aufweist, die größer als die Ausdehnung (W1, W2, W3, W4)
der Kontur einer der berührten primären Kontaktflächen (8; 23) in derselben Richtung (X, Y, Z) ist, und die zur Abschirmung spannungsführender Pole gegen Berührung durch Personen ausgelegt ist.

2. Kontaktierungssystem (1; 16) gemäß Anspruch 1, **dadurch gekennzeichnet, dass** die zweite Isolationsfläche (14) zumindest eine Mindestbreite aufweist, die größer als der Durchmesser (D) eines Umfangkreises um die größte äußere Kontur einer der berührten primären Kontaktflächen (8; 23) ist.

3. Kontaktierungssystem (1) gemäß Anspruch 1 und 2, **dadurch gekennzeichnet, dass** die zweite sekundäre Kontaktfläche (6) die erste sekundäre Kontaktfläche (5) vollständig umgibt und, dass die zweite Isolationsfläche (14) die zweite sekundäre Kontaktfläche (6) vollständig umgibt.

4. Kontaktierungssystem (1) gemäß Anspruch 3, **dadurch gekennzeichnet, dass** die erste sekundäre Kontaktfläche (5) im Zentrum der zweiten sekundären Kontaktfläche (6) angeordnet ist und, dass die zweite sekundäre Kontaktfläche (6) und die zweite Isolationsfläche (14) konzentrische Kreise um die erste sekundäre Kontaktfläche (5) bilden.

5. Kontaktierungssystem (1) gemäß Anspruch 4, **dadurch gekennzeichnet, dass** eine erste Isolationsfläche (15) als konzentrischer Kreis um die erste sekundäre Kontaktfläche (5) zwischen der ersten sekundären Kontaktfläche (5) und der zweiten sekundären Kontaktfläche (6) angeordnet ist, wobei die erste Isolationsfläche (15) ebenfalls zumindest die Mindestbreite (W1, W2) aufweist.

6. Kontaktierungssystem (1; 16) gemäß einem der vorstehenden Ansprüche, **dadurch gekennzeichnet, dass** die primären Kontaktflächen (8) durch Sechsecke gebildet sind.

7. Kontaktierungssystem (1; 16; 22) gemäß einem der vorstehenden Ansprüche, **dadurch gekennzeichnet, dass** die primären Kontaktflächen (8; 23) rasterförmig angeordnet sind.

8. Kontaktierungssystem (1; 16; 22) gemäß einem der vorstehenden Ansprüche, **dadurch gekennzeichnet, dass** zwischen dem ersten Pol und dem zweiten Pol eine Spannung von über 60 Volt liegt.

9. Kontaktierungssystem (1; 16; 22) gemäß einem der vorstehenden Ansprüche, **dadurch gekennzeichnet, dass** das primäre Übertragungselement (7; 21) in der Fahrbahn eines Parkplatzes und das sekundäre Übertragungselement (4; 17) in dem Fahrzeug absenkbar und anhebbar zum Kontaktieren des primären Übertragungselements (7; 21) vorgesehen ist.

10. Kontaktierungssystem (22) gemäß einem der vorstehenden Ansprüche, **dadurch gekennzeichnet, dass** Positionierungsmittel vorgesehen sind, die zum richtungsabhängigen Positionieren des sekundären Übertragungselements (24) auf dem primären Übertragungselement (21) ausgebildet sind und, dass die Mindestbreite (W3, W4) der zweiten Isolationsfläche (27) richtungsabhängig unterschiedlich breit ist.

11. Kontaktierungssystem (22) gemäß Anspruch 10, **dadurch gekennzeichnet, dass** die äußere Kontur der primären Kontaktflächen (23) richtungsabhängig und insbesondere oval ist und, dass die Mindestbreite (W3, W4) der zweiten Isolationsfläche (27) bei durch die Positionsmittel auf den primären Kontaktflächen (23) positionierten sekundären Kontaktflächen (25, 26) richtungsabhängig zumindest der Breite der primären Kontaktfläche (23) in derselben Richtung (X, Y, Z) entspricht.

## Claims

1. A contacting system (1; 16; 22) for establishing an electrical connection between a vehicle and a power supply (11) having a first terminal and a second terminal for charging the vehicle, comprising:
a primary transmission element (7; 21) which has a plurality of primary contact surfaces (8; 23) arranged in a structured manner, electrically insulated from each other and each having an outer contour, and comprising
a secondary transmission element (4; 17, 24) which has at least one first secondary contact surface (5; 18; 25) for contacting the first terminal and at least one second secondary contact surface (6; 19; 26) for contacting the second terminal, wherein the secondary contact surfaces (5, 6; 18, 19; 24, 25) are electrically insulated from each other, and comprising
control means (9) which are designed to determine first primary contact surfaces (12) which are in contact with the first secondary contact surface (5) and which are designed to determine second primary contact surfaces (13) which are in contact with the second secondary contact surface (6), and which are designed to establish an electrical connection between the first terminal of the power supply (11) and the first terminal of the vehicle via the first primary contact surfaces (12) and the first secondary contact surface (5; 18) and which are designed to establish an electrical connection between the second terminal of the power supply (11) and the second terminal of the vehicle via the second primary contact surfaces (13) and the second secondary contact surface (6; 19) for the power supply of the vehicle, wherein the control means (9) are furthermore designed to switch all primary contact surfaces (8; 23) potential-free which were determined neither as first primary contact surface (12) nor as second primary contact surface (13) by the control means (9),
**characterized in that**
a second insulating surface (14; 20; 27) surrounding the secondary contact surfaces (5, 6; 18; 19; 24, 25) is provided, which has at least one optionally direction-dependent minimum width (B, B1, B2) that is greater than the extent (W1, W2, W3, W4) of the contour of one of the contacted primary contact surfaces (8; 23) in the same direction (X, Y, Z), and which is designed to shield live terminals against being touched by persons.

2. The contacting system (1; 16) according to claim 1, **characterized in that** the second insulating surface (14) has at least one minimum width which is greater than the diameter (D) of a circumference around the largest outer contour of one of the contacted primary contact surfaces (8; 23).

3. The contacting system (1) according to claims 1 and 2, **characterized in that** the second secondary contact surface (6) completely surrounds the first secondary contact surface (5) and **in that** the second insulating surface (14) completely surrounds the second secondary contact surface (6).

4. The contacting system (1) according to claim 3, **characterized in that** the first secondary contact surface (5) is arranged in the center of the second secondary contact surface (6) and **in that** the second secondary contact surface (6) and the second insulating surface (14) form concentric circles around the first secondary contact surface (5).

5. The contacting system (1) according to claim 4, **characterized in that** a first insulating surface (15) is arranged as a concentric circle around the first secondary contact surface (5) between the first secondary contact surface (5) and the second secondary contact surface (6), wherein the first insulating surface (15) likewise has at least the minimum width (W1, W2).

6. The contacting system (1; 16) according to any of the preceding claims, **characterized in that** the primary contact surfaces (8) are formed by hexagons.

7. The contacting system (1; 16; 22) according to any of the preceding claims, **characterized in that** the primary contact surfaces (8; 23) are arranged in the shape of a grid.

8. The contacting system (1; 16; 22) according to any of the preceding claims, **characterized in that** there is a voltage of over 60 volts between the first terminal and the second terminal.

9. The contacting system (1; 16; 22) according to any of the preceding claims, **characterized in that** the primary transmission element (7; 21) is provided in the road surface of a parking space and the secondary transmission element (4; 17) is provided in the vehicle such that it can be lowered and raised for contacting the primary transmission element (7; 21).

10. The contacting system (22) according to any of the preceding claims, **characterized in that** positioning means are provided which are designed for direction-dependent positioning of the secondary transmission element (24) on the primary transmission element (21) and **in that** the minimum width (W3, W4) of the second insulating surface (27) varies depending on the direction.

11. The contacting system (22) according to claim 10, **characterized in that** the outer contour of the primary contact surfaces (23) is direction-dependent and in particular oval and **in that**, if secondary contact surfaces (25, 26) are positioned on the primary contact surfaces (23) by the positioning means, the minimum width (W3, W4) of the second insulating surface (27) corresponds in a direction-dependent manner at least to the width of the primary contact surface (23) in the same direction (X, Y, Z).

## Revendications

1. Système de mise en contact (1; 16; 22) pour l'établissement d'une liaison électrique entre un véhicule et une alimentation en énergie (11) comprenant un premier pôle et un deuxième pôle pour charger le véhicule, comprenant :
un élément de transmission primaire (7 ; 21) qui présente une pluralité de surfaces de contact primaires (8 ; 23) qui sont agencées de manière structurée, qui sont électriquement isolées les unes par rapport aux autres et qui présentent chacune un contour extérieur, et comprenant
un élément de transmission secondaire (4 ; 17, 24) qui présente au moins une première surface de contact secondaire (5 ; 18 ; 25) pour contacter le premier pôle et au moins une deuxième surface de contact secondaire (6 ; 19 ; 26) pour contacter le deuxième pôle, les surfaces de contact secondaires (5, 6 ; 18, 19 ; 24, 25) étant électriquement isolées les unes par rapport aux autres, et comprenant
des moyens de commande (9) qui sont réalisés pour la détermination de premières surfaces de contact primaires (12) qui touchent la première surface de contact secondaire (5), et qui sont réalisés pour la détermination de deuxièmes surfaces de contact primaires (13) qui touchent la deuxième surface de contact secondaire (6), et qui sont réalisés pour l'établissement d'une liaison électrique par l'intermédiaire des premières surfaces de contact primaires (12) et de la première surface de contact secondaire (5 ; 18) entre le premier pôle de l'alimentation en énergie (11) et le premier pôle du véhicule, et qui sont réalisés pour l'établissement d'une liaison électrique par l'intermédiaire des deuxièmes surfaces de contact primaires (13) et la deuxième surface de contact secondaire (6 ; 19) entre le deuxième pôle de l'alimentation en énergie (11) et le deuxième pôle du véhicule pour l'alimentation en énergie du véhicule, les moyens de commande (9) étant en outre réalisés de manière à commuter toutes les surfaces de contact primaires (8 ; 23) qui n'ont pas été déterminées en tant que première surface de contact primaire (12) ou en tant que deuxième surface de contact primaire (13) par les moyens de commande (9) sans potentiel,
**caractérisé en ce que**
il est prévu une deuxième surface d'isolation (14 ; 20 ; 27) qui entoure les surfaces de contact secondaires (5, 6 ; 18 ; 19 ; 24, 25) et qui présente au moins une largeur minimale (B, B1, B2) qui dépend, le cas échéant, de la direction et qui est supérieure à l'extension (W1, W2, W3, W4), dans le même sens (X, Y, Z), du contour de l'une des surfaces de contact primaires (8 ; 23) touchées, et qui sert à la protection de pôles sous tension contre un contact par des personnes.

2. Système de mise en contact (1 ; 16) selon la revendication 1, **caractérisé en ce que** la deuxième surface d'isolation (14) présente au moins une largeur minimale qui est supérieure au diamètre (D) d'un cercle périphérique autour du contour extérieur le plus grand de l'une des surfaces de contact primaires (8 ; 23) touchées.

3. Système de mise en contact (1) selon les revendications 1 et 2, **caractérisé en ce que** la deuxième surface de contact secondaire (6) entoure entièrement la première surface de contact secondaire (5) et **en ce que** la deuxième surface d'isolation (14) entoure entièrement la deuxième surface de contact secondaire (6).

4. Système de mise en contact (1) selon la revendication 3, **caractérisé en ce que** la première surface de contact secondaire (5) est agencée au centre de la deuxième surface de contact secondaire (6) et **en ce que** la deuxième surface de contact secondaire (6) et la deuxième surface d'isolation (14) forment des cercles concentriques autour de la première surface de contact secondaire (5).

5. Système de mise en contact (1) selon la revendication 4, **caractérisé en ce que** la première surface d'isolation (15) est agencée sous forme de cercle concentrique autour de la première surface de contact secondaire (5) entre la première surface de contact secondaire (5) et la deuxième surface de contact secondaire (6), la première surface d'isolation (15) présentant aussi au moins la largeur minimale (W1, W2).

6. Système de mise en contact (1 ; 16) selon l'une des revendications précédentes, **caractérisé en ce que** les surfaces de contact primaires (8) sont formées par des hexagones.

7. Système de mise en contact (1 ; 16 ; 22) selon l'une des revendications précédentes, **caractérisé en ce que** les surfaces de contact primaires (8 ; 23) sont agencées en trame.

8. Système de mise en contact (1 ; 16 ; 22) selon l'une des revendications précédentes, **caractérisé en ce qu'**une tension de plus de 60 volts est appliquée entre le premier pôle et le deuxième pôle.

9. Système de mise en contact (1 ; 16 ; 22) selon l'une des revendications précédentes, **caractérisé en ce que** l'élément de transmission primaire (7 ; 21) est apte à être abaissé et soulevé dans la voie d'une aire de stationnement et l'élément de transmission secondaire (4 ; 17) est apte à être abaissé et soulevé dans le véhicule pour contacter l'élément de transmission primaire (7 ; 21).

10. Système de mise en contact (22) selon l'une des revendications précédentes, **caractérisé en ce qu'**il est prévu des moyens de positionnement qui sont réalisés pour le positionnement directionnel de l'élément de transmission secondaire (24) sur l'élément de transmission primaire (21) et **en ce que** la largeur minimale (W3, W4) de la deuxième surface d'isolation (27) présente différentes largeurs en fonction de la direction.

11. Système de mise en contact (22) selon la revendication 10, **caractérisé en ce que** le contour extérieur de la surface de contact primaire (23) dépend de la direction et est en particulier ovale et **en ce que** la largeur minimale (W3, W4) de la deuxième surface d'isolation (27) correspond, en fonction de la direction, au moins à la largeur, dans le même sens (X, Y, Z), de la surface de contact primaire (23) lorsque les surfaces de contact secondaires (25, 26) sont positionnées sur les surfaces de contact primaires (23) par les moyens de positionnement.
